# FASCICULE DE BREVET EUROPEEN

(11) **EP 0 781 440 B1**
(45) Date de publication et mention de la délivrance du brevet: **12.08.1998**
(21) Numéro de dépôt: 95929925.6
(22) Date de dépôt: 04.09.1995
(51) Int. Cl.: G08G 1/017

(54) **DISPOSITIF ET PROCEDE DE TELE-CONTROLE D'UN OBJET**
VORRICHTUNG UND VERFAHREN ZUR FERNÜBERWACHUNG VON EINEM GEGENSTAND
DEVICE AND METHOD FOR THE TELECONTROL OF AN OBJECT

(30) Priorité: 16.09.1994 FR 9411095
(43) Date de publication de la demande: 02.07.1997
(73) Titulaire: INMED-B.V., 2625 RE Delft (NL)
(72) Inventeur: LIGER, René, F-78270 Limetz-Villetz (FR)
(74) Mandataire: Plaçais, Jean-Yves
(86) Numéro de dépôt international: FR9501145
(87) Numéro de publication internationale: WO9608802

(56) Documents cités:
- EP-A- 0 252 773
- WO-A-94/08820

## Description

L'invention concerne le télé-contrôle d'objets, et notamment le télé-contrôle du déplacement de véhicules automobiles, aux fins de produire une dissuasion efficace contre le vol et/ou de permettre des "transactions".

On entend par transaction tout type de collecte ou d'envoie de données dans le but respectivement de recevoir des renseignements en provenance de l'objet interrogé ou de transmettre audit objet des informations. Il pourra s'agir notamment de contrôler le niveau d'une pile, de valider le péage d'un parking ou d'une autoroute, d'identifier un objet, de remplacer un code mémorisé dans une mémoire réinscriptible, de commander le déclenchement d'une alarme.

On connaît déjà différents moyens utilisés pour la dissuasion contre le vol des automobiles. L'un de ceux-ci consiste à lire à distance une ou plusieurs marques que porte le véhicule et qui sont susceptibles de l'identifier.

De tels dispositifs comprennent un organe interrogateur apte à effectuer une interrogation primaire par voie d'ondes pour interroger sélectivement au moins une cellule primaire réceptrice/émettrice logée dans ou sur ledit objet et contenant dans des moyens de mémorisation primaires un premier code, et à recevoir de ladite cellule primaire une réponse primaire susceptible de représenter une partie au moins de ce premier code.

Un dispositif de ce type est connu notamment par le Brevet français No 89 17133 (FR-A-2 656449), lequel décrit un procédé de contrôle du déplacement d'objets, ainsi que le dispositif associé. Ce dispositif comprend au moins une voie de passage obligé équipée d'un lecteur émetteur/récepteur fixe formant organe interrogateur connecté à une station et au moins une cellule réceptrice/émettrice logée dans ou sur le véhicule.

Lorsqu'un véhicule passe dans la voie de passage au-dessus de l'organe interrogateur, cela provoque l'émission d'un code d'identification commun à toutes les cellules implantées dans les véhicules. Ce code d'identification est réceptionné par la cellule, laquelle le compare ensuite au code d'identification qu'elle contient dans une mémoire de type électriquement programmable. Si les deux codes sont identiques, la cellule émet en direction de l'organe interrogateur un signal fonction de son propre code d'identification qui est contenu dans une mémoire morte. Le signal émis par la cellule est ensuite réceptionné par l'organe interrogateur, lequel le communique à des moyens de traitement qui en déduisent le code d'identification du véhicule qu'ils vont ensuite comparer aux codes des véhicules équipés, qui sont contenus dans des fichiers.

Une telle solution offre une bonne protection contre les fraudes de type mécanique (destruction ou blindage de la cellule) lorsque la cellule est implantée de façon invisible dans le véhicule.

Cependant, cette solution connue ne permet pas de se protéger contre certaines fraudes électroniques puisque :
- d'une première part, on ne peut pas modifier les codes d'identification propres aux cellules étant donné qu'ils sont contenus dans la mémoire morte d'une cellule dont l'accès est rendu difficile, voire impossible, de par son implantation;
- d'une seconde part, étant donné que le code émis par l'organe interrogateur est commun à toutes les cellules et que les codes propres à chaque cellule sont contenus dans un fichier, toute personne ayant eu accès à un instant donné audit fichier est à même de réaliser et d'implanter un leurre de remplacement sur un véhicule donné;
- d'une troisième part, l'organe interrogateur ne peut effectuer qu'une unique interrogation consistant à obtenir le code propre à chaque cellule, ce qui interdit toute autre transaction que celle d'identification.

Par ailleurs, l'organe interrogateur étant fixe, une telle solution ne permet pas d'effectuer une identification en un lieu quelconque.

La présente invention vient proposer un moyen de transaction multiple, et notamment de dissuasion anti-vol propre à remédier aux inconvénients précités.

Elle propose à cet effet un dispositif du type décrit précédemment, et comprenant en outre au moins une cellule secondaire réceptrice/émettrice logée dans ou sur ledit objet et contenant dans des moyens de mémorisation secondaires un second code et une première représentation d'une partie au moins du premier code, et apte à émettre, en réponse à une interrogation secondaire, une réponse secondaire susceptible de représenter une partie au moins de ce second code, ainsi qu'à effectuer, après une interrogation primaire de la cellule primaire et une interrogation secondaire de la cellule secondaire, au moins une réponse complémentaire en réponse à une interrogation complémentaire effectuée par l'organe interrogateur, ladite interrogation complémentaire contenant une seconde représentation d'une partie au moins des premier et second codes émis respectivement par lesdites cellules primaire et secondaire en réponse aux interrogations primaire et secondaire.

Cela permet à la cellule secondaire d'effectuer une réponse complémentaire en fonction des réponses primaire et secondaire des cellules primaire et secondaire, respectivement.

Ainsi, l'identification d'un véhicule par un organe interrogateur passe nécessairement par l'interrogation de deux cellules, l'une pouvant être visible et réalisée sous la forme d'une vignette apposée sur le pare-brise du véhicule, l'autre étant invisible de par son implantation à l'intérieur dudit véhicule.

De plus, un tel dispositif autorise toutes sortes de transactions à distance puisque le nombre d'émissions/réceptions entre l'organe interrogateur, qui n'est pas nécessairement fixe, et l'une au moins des cellules n'est pas limité à 1.

Selon une autre caractéristique de l'invention, les liaisons d'émission-réception entre l'organe interrogateur et l'une au moins des cellules s'effectuent sur au moins quatre fréquences distinctes. Cela permet à l'organe interrogateur de mémoriser de façon sélective la partie au moins des premier et second codes émis par les cellules primaire et secondaire en réponse aux interrogations primaire et secondaire, en fonction des fréquences d'émission des réponses primaire et secondaire des cellules.

Ainsi, l'interrogation d'une cellule est réalisée indépendamment des autres cellules, ce qui évite les conflits d'informations, et restreint notablement les possibilités de brouillage.

Cet effet est d'ailleurs renforcé par le fait que les interrogations peuvent être effectuées soit par voie électromagnétique, soit par voie inductive.

Selon encore une autre caractéristique de l'invention, l'interrogation complémentaire comprend en outre une zone d'ordre comportant un ordre d'exécuter une "transaction". Par ailleurs, en cas d'absence de réponse de l'une au moins des cellules primaire et secondaire, la seconde représentation de la partie au moins du code absent est remplacée par un code spécifique de déclaration d'absence de ladite cellule absente.

De la sorte, la cellule secondaire peut être mise au courant en une seule interrogation complémentaire, d'une part, de la transaction demandée, et d'autre part, de la présence ou de l'absence de la première cellule.

Selon encore une autre caractéristique de l'invention, la cellule secondaire comprend en outre des moyens de traitement aptes à comparer les codes des cellules primaire et secondaire contenus dans ces moyens de mémorisation secondaires, à la seconde représentation des parties au moins des codes respectifs des cellules primaire et secondaire compris dans l'interrogation complémentaire.

Ainsi, de façon particulièrement avantageuse, ce n'est plus l'organe interrogateur qui effectue la vérification des codes des cellules par comparaison avec des codes contenus dans un fichier, comme cela est connu, mais c'est la cellule secondaire qui se trouve logée dans ou sur ledit objet qui effectue désormais ladite comparaison.

Avantageusement, les moyens de mémorisation primaires et secondaires sont réinscriptibles.

Ainsi, un organe interrogateur situé à proximité d'un objet équipé des cellules selon l'invention est également apte à modifier sur ordre le premier code contenu dans les moyens de mémorisation primaires et sa première représentation dans les moyens de mémorisation secondaires, et/ou le second code contenu dans les moyens de mémorisation secondaires.

En conséquence, les codes contenus dans chaque cellule peuvent être à tout moment changés, ce qui limite notablement les possibilités de fraude électronique.

L'invention décrit également un procédé de télé-contrôle d'un objet, dans lequel de façon connue :
a) on munit l'objet d'au moins une cellule primaire réceptrice/émettrice logée dans ou sur ledit objet et contenant dans des moyens de mémorisation primaires un premier code, et apte à émettre une réponse primaire en réponse à une interrogation primaire, et
b) on procède à une interrogation sélective primaire par voie d'ondes de cette cellule primaire, et on reçoit de ladite cellule primaire une réponse primaire susceptible de représenter une partie au moins du premier code.

Le procédé selon l'invention prévoit que :
- à l'étape a), on prévoit au moins une cellule secondaire réceptrice/émettrice logée dans ou sur ledit objet et contenant dans des moyens de mémorisation secondaires un second code et une première représentation d'une partie au moins du premier code, ladite cellule secondaire étant apte à émettre une réponse secondaire en réponse à une interrogation secondaire effectuée par l'organe interrogateur et au moins une réponse complémentaire en réponse à une interrogation complémentaire effectuée par ledit organe interrogateur,
- à l'étape b), on procède à une interrogation sélective secondaire par voie d'ondes de la cellule secondaire, et on reçoit de ladite cellule secondaire une réponse secondaire susceptible de représenter une partie au moins du second code, et

Ledit procédé selon l'invention comporte en outre :
. une étape c) dans laquelle on émet vers la cellule secondaire une interrogation complémentaire contenant une seconde représentation d'une partie au moins des premier et second codes émis par lesdites cellules primaire et secondaire à l'étape b),
. une étape d) dans laquelle la cellule secondaire compare le second code et la première représentation d'une partie au moins du premier code contenus dans ses moyens de mémorisation secondaires, à la seconde représentation des parties au moins des codes respectifs des cellules primaire et secondaire compris dans l'interrogation complémentaire, et
. une étape e) dans laquelle la cellule secondaire émet au moins une réponse complémentaire en fonction de l'interrogation complémentaire reçue à l'étape c).

Selon un autre aspect du procédé selon l'invention, en cas de comparaison au moins partiellement non réussie dans l'étape d), il est prévu de recommencer au moins une fois les étapes b) à d), et d'incrémenter un compteur d'incrémentation logé dans la cellule secondaire.

Par ailleurs, le nombre de répétitions autorisées des étapes b) à d), en cas de comparaison au moins partiellement non réussie, est prédéterminé, ce qui déclenche, en cas de dépassement dudit nombre prédéterminé, l'émission par la cellule secondaire d'une réponse d'alarme.

Ainsi, en cas de dysfonctionnement ou d'absence de l'une des cellules, et notamment de la cellule primaire, l'organe interrogateur n'est mis au courant qu'en cas de confirmation de non-réussite des étapes b) à d), ce qui lui permet d'alerter soit le possesseur de l'organe interrogateur, soit plus directement un central en liaison avec ledit organe interrogateur.

D'autres caractéristiques et avantages de l'invention apparaîtront à l'examen de la description détaillée ci-après, et des dessins annexés, sur lesquels :
- la figure 1 est un schéma illustrant les liaisons entre les différents éléments constituant le dispositif;
- la figure 2 est un schéma de principe d'un dispositif mettant en oeuvre l'invention;
- la figure 3 est un organigramme illustrant les principales étapes du protocole de communication selon l'invention;
- la figure 4 est un schéma de principe d'un dispositif fixe mettant également en oeuvre l'invention.

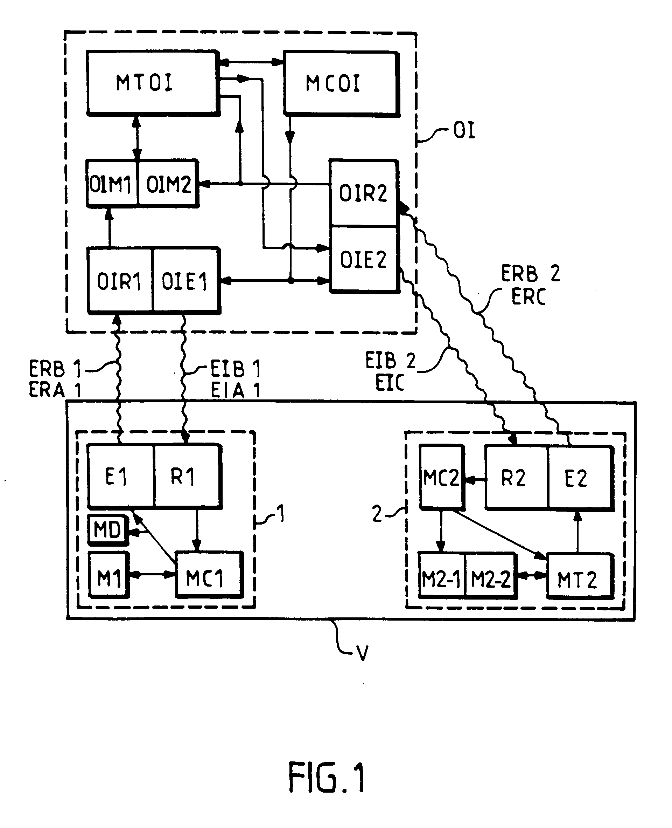

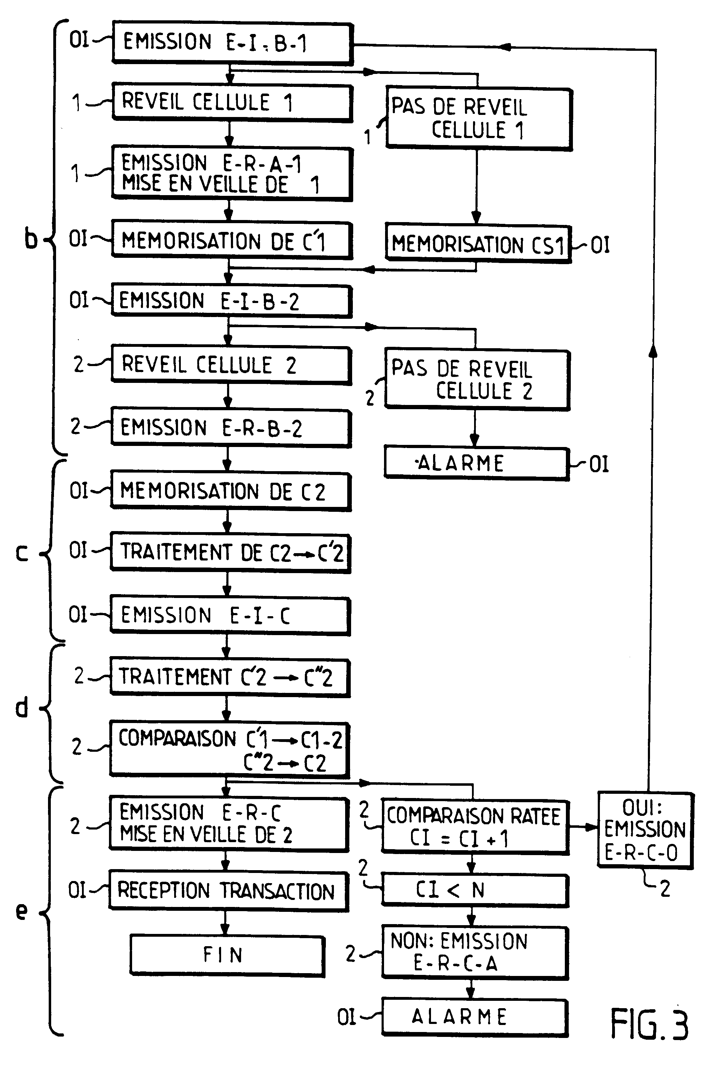

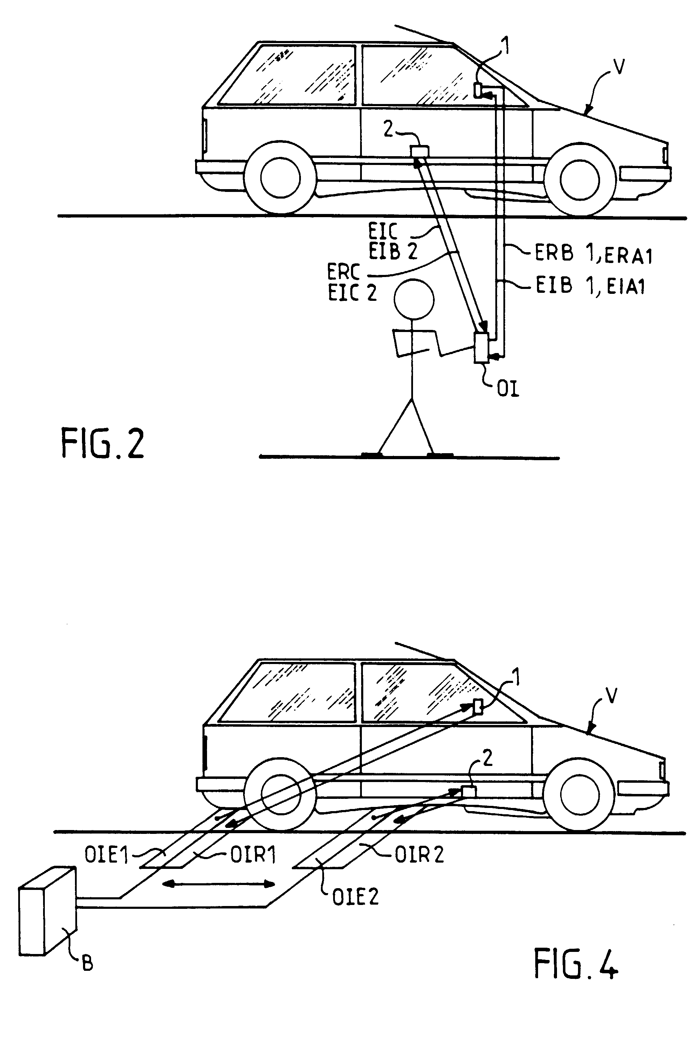

On se réfère tout d'abord aux figures 1 et 2 pour décrire les principaux éléments constituant le dispositif selon un mode de réalisation de l'invention.

Dans ce mode de réalisation, le dispositif comprend une cellule primaire 1 et une cellule secondaire 2 logées dans un véhicule V, et un organe interrogateur OI propre à interroger à distance par voie d'ondes les cellules primaire 1 et secondaire 2.

La cellule primaire 1 est par exemple réalisée sous la forme d'une vignette que l'on colle sur le pare-brise du véhicule V.

Elle comprend un module de réception R1 et d'émission E1 pour communiquer avec l'organe interrogateur OI, un module de commande primaire MC1 propre à effectuer des opérations prédéterminées en réponse à une interrogation dudit organe interrogateur OI, des moyens de mémorisation primaires M1 réinscriptibles et contenant un premier code C1 qui lui est propre, et un module de communication MD1 pour communiquer avec le conducteur du véhicule V.

Le module de commande primaire MC1 contient une pile basse tension pilotée par un circuit à temporisation autorisant deux états : un état de veille sans consommation d'énergie, et un état de fonctionnement pour répondre à une interrogation.

Ce module primaire, MC1, est connecté d'une première part à la partie réceptrice R1 du module de réception/émission duquel il reçoit les données, d'une seconde part aux moyens de mémorisation primaires M1, ce qui lui permet soit d'en extraire le premier code C1, soit d'effectuer sur ordre le remplacement dudit premier code C1, d'une troisième part à la partie émettrice E1 du module de réception/émission, ce qui lui permet de répondre à une interrogation, ou d'émettre une alarme si besoin est, et d'une quatrième part au module de communication MD1 auquel il signale des problèmes en cas, par exemple, de mauvaise réception lors d'une interrogation de la cellule primaire 1, ou de mauvais fonctionnement de l'un des éléments constituant la cellule primaire 1.

Une telle communication entre MD1 et le conducteur peut s'effectuer par utilisation d'une diode électroluminescente, ou d'un bruiteur ("buzzer").

La cellule secondaire 2 est par exemple réalisée sous la forme d'un boîtier implanté dans la structure du véhicule V, ce qui la rend invisible et donc la protège des fraudes de type mécanique.

Elle comprend un module de réception R2 et d'émission E2 pour communiquer avec l'organe interrogateur OI, un module de commande secondaire MC2 propre à effectuer des opérations prédéterminées en réponse à une interrogation dudit organe interrogateur OI, un module de traitement MT2 propre à effectuer des traitements de données issus du module de commande secondaire MC2 et à effectuer une ou plusieurs réponses pour répondre à une interrogation, et des moyens de mémorisation secondaires M2 réinscriptibles et contenant dans une première partie M2-1 une première représentation FR1 d'une partie au moins du premier code C1 et dans une seconde partie M2-2 un second code C2 qui lui est propre.

Le module de commande secondaire MC1 contient une pile basse tension pilotée par un circuit à temporisation autorisant deux états : un état de veille sans consommation d'énergie, et un état de fonctionnement pour répondre à une interrogation.

Ce module de commande secondaire MC1 est connecté d'une première part à la partie réceptrice R2 du module récepteur/émetteur duquel il reçoit les données, d'une seconde part aux moyens de mémorisation secondaires M2, ce qui lui permet d'y effectuer le remplacement sur ordre du second code C2 et/ou de la première représentation FR1 du premier code, et d'une troisième part au module de traitement MT2 auquel il fournit des ordres et/ou des données issues du récepteur R2.

Le module de traitement MT2 est également connecté d'une part aux moyens de mémorisation secondaires M2, ce qui lui permet d'en extraire les codes qu'ils contiennent, et d'autre part à la partie émettrice E2 du module de réception/émission, ce qui lui permet de répondre aux interrogations, ou d'émettre une alarme si besoin est.

Chaque module de réception d'une cellule R1 ou R2 est réalisé de telle sorte qu'il puisse réceptionner des émissions effectuées par voie électromagnétique ou par voie inductive.

L'organe interrogateur OI comprend un premier module d'émission OIE1 et de réception OIR1 pour communiquer avec la cellule primaire 1, un second module d'émission OIE2 et de réception OIR2 pour communiquer avec la cellule secondaire 2, des moyens de mémorisation OIM1 et OIM2 propres à mémoriser des données issues respectivement des parties réceptrices OIR1 et OIR2, un module de commande MCOI propre à commander sur ordre l'interrogation des cellules primaire 1 et secondaire 2, ainsi que réceptionner des données issues d'un module de traitement MTOI qui traite les données issues des moyens de mémorisation OIM ou de la partie réceptrice OIR2 du second module d'émission/réception.

Chaque module d'émission OIE1 et OIE2 est propre à interroger une cellule par voie électromagnétique ou par voie inductive.

Le module de traitement MTOI est connecté d'une première part à la partie réceptrice OIR2 du second module d'émission/réception qui lui fournit des données à traiter issues directement de la cellule secondaire 2, d'une seconde part aux moyens de mémorisation OIM1 et OIM2, ce qui lui permet d'en extraire les codes qu'ils contiennent, d'une troisième part au module de commande MCOI, duquel il reçoit des ordres prédéterminés l'autorisant à réaliser un traitement de données, et d'une quatrième part à la partie émettrice OI2 du second module d'émission/réception pour commander l'interrogation de la cellule secondaire après certains traitements.

La séparation des modules d'émission/réception de l'organe interrogateur OI permet à chaque cellule 1 ou 2 de communiquer avec ledit organe interrogateur OI sur des fréquences différentes en émission comme en réception.

La cellule primaire 1 est apte à effectuer une réponse dite "primaire" ERB1, ERA1 susceptible de représenter une partie au moins du premier code C1 qu'elle contient, en réponse à une interrogation dite "primaire" effectuée par un organe interrogateur OI. Ce code C1 pourra contenir par exemple 16 bits.

La cellule secondaire 2 est apte à effectuer une réponse secondaire ERB2 susceptible de représenter une partie au moins du second code C2 qu'elle contient, ainsi qu'au moins une réponse dite "complémentaire", en réponse à une interrogation dite "complémentaire" effectuée par un organe interrogateur OI. Ce code C2 pourra contenir par exemple 16 bits.

Une interrogation complémentaire comprend une seconde représentation SR2 d'une partie au moins des premier et second codes émis par les cellules primaire 1 et secondaire 2 en réponse aux interrogations primaire et secondaire, ainsi qu'une zone d'ordre comportant un ordre d'exécuter une "transaction".

Les interrogations entre l'organe interrogateur OI et les cellules primaire 1 et secondaire 2 sont effectuées par exemple à 125 kHz et 62,5 kHz respectivement, tandis que les réponses entre les cellules primaire 1 et secondaire 2 et l'organe interrogateur OI sont effectuées respectivement, par exemple, à 225 MHz et 30,875 MHz.

De la sorte, les réponses de chaque cellule sont sélectionnées directement par le récepteur OIR dont la fréquence est centrée sur celle de ladite réponse.

Cette solution particulièrement avantageuse est certes plus encombrante, mais elle présente l'avantage de rendre indépendantes les liaisons entre cellules, ce qui évite les conflits d'informations. Par ailleurs, elle permet de mémoriser dans des mémoires différentes, sans utiliser de filtre, les réponses émises sur des fréquences différentes, ce qui simplifie notablement le traitement des données.

Pour décrire le procédé de télé-contrôle selon l'invention, il est fait référence à la figure 3.

Ce procédé est divisé en cinq étapes :
- une étape a) dans laquelle on installe les cellules primaire 1 et secondaire 2 dans le véhicule V, la cellule primaire 1 contenant un premier code spécifique C1 dans sa mémoire primaire Ml, et la cellule secondaire 2 contenant un second code spécifique C2 ainsi qu'une première représentation FR1 du premier code C1 respectivement dans les seconde M2-2 et première M2-1 parties de sa mémoire secondaire M2;
- une étape b) dans laquelle on procède à l'interrogation sélective primaire EIB1, EIA1 de la cellule primaire 1, puis à l'interrogation sélective secondaire EIB2 de la cellule secondaire 2. Les interrogations primaire et secondaire peuvent être soit simultanées soit successives.

Chaque cellule répond à l'interrogation primaire ou secondaire en renvoyant une réponse primaire ou secondaire ERB1, ERA1 et ERB2 en direction de l'organe interrogateur OI qui mémorise le code contenu dans chaque réponse dans l'une des mémoires OIM1 ou OIM2 en fonction de la fréquence de ladite réponse;
- une étape c) dans laquelle l'organe interrogateur OI émet vers la cellule secondaire 2 une interrogation complémentaire OIC contenant une seconde représentation SR2 d'une partie au moins des premier C1 et second C2 codes émis par lesdites cellules primaire 1 et secondaire 2 à l'étape b);
- une étape d) dans laquelle la cellule secondaire 2 compare, grâce à son module de traitement MT2, le second code C2 et la première représentation FR1 contenue dans ses moyens de mémorisation secondaires respectivement M2-2 et M2-1, aux parties au moins des codes respectifs des cellules primaire 1 et secondaire 2 de la seconde représentation SR2 reçue à l'étape c);
- une étape e) dans laquelle la cellule secondaire 2 émet au moins une réponse complémentaire ERC en fonction de la comparaison effectuée à l'étape d) et de l'ordre contenu dans l'interrogation complémentaire EIC.

Les étapes b) à e) peuvent être décomposées comme suit :

### - étape b) :

Deux types d'ordres peuvent entraîner l'interrogation des cellules primaire 1 et secondaire 2 logées dans un véhicule V : un ordre externe à l'organe interrogateur OI, ou une procédure automatique déclenchée par la détection du passage dudit véhicule V.

Une fois averti, le module de commande MCOI dudit organe interrogateur OI ordonne alors à la partie émettrice OIE1 du premier module d'émission/réception d'émettre une interrogation primaire EIB1, EIA1 en direction de la cellule primaire 1. Cette interrogation primaire EIB1, EIA1 consiste en une porteuse modulée par exemple en amplitude (AM) à 2280 Hz. Mais on peut également effectuer la modulation en phase, ou de toute autre façon connue.

L'interrogation primaire est réalisée en deux sous-étapes. Dans une première étape, on émet une interrogation primaire dite "de base" EIB1 pour demander à la cellule primaire de renvoyer une partie au moins du premier code qu'elle contient dans sa mémoire primaire M1. Si l'intensité du signal est suffisante, et si la cellule primaire reconnaît la porteuse dans un délai donné, alors le module de commande primaire MC1 passe de l'état de veille à l'état de fonctionnement, ce qui met en oeuvre un circuit de temporisation. La cellule primaire dispose alors d'une première durée prédéterminée pour répondre.

Ledit module de commande primaire MC1 extrait une partie au moins du premier code C1 contenu dans la mémoire primaire M1, puis insère ces bits du premier code dans une séquence de bits. Cette séquence est transmise à la partie émettrice El du module de réception/émission qui la transmet par voie d'ondes sous la forme d'une réponse primaire de base ERB1 à l'organe interrogateur OI. Ce dernier réceptionne ERB1, effectue un traitement prédéterminé des bits de la séquence reçue puis effectue une interrogation primaire de confirmation ERA1 en renvoyant à la première cellule les bits ainsi traités dans une nouvelle séquence de bits.

La cellule primaire 1 réceptionne au niveau de son module de réception R1 cette séquence de bits, et la compare à un code mémorisé dans la mémoire primaire M1. Si la comparaison est réussie, ledit module MC1 extrait alors le code C1 contenu dans la mémoire primaire M1 et le communique à la partie émettrice E1 de son module de réception/émission afin qu'elle le transmette par voie d'ondes sous forme d'une réponse primaire de confirmation ERA1 à l'organe interrogateur OI. Ce dernier réceptionne ERA1 et mémorise dans sa mémoire OIM1 la représentation C'1 du premier code C1 qu'il vient de recevoir.

Cette interrogation primaire à deux sous-étapes permet de limiter notablement les tentatives de fraude électronique sur la cellule primaire.

Lorsque la durée de la temporisation est écoulée, le module de commande primaire MC1 commute de l'état de fonctionnement à l'état de veille.

Si l'intensité du signal de la porteuse n'est pas suffisante, et/ou si la cellule primaire 1 ne reconnaît pas la porteuse, et/ou si la réponse primaire ERB1 et/ou ERA1 n'est pas complète, l'organe interrogateur OI mémorise un premier code spécifique CS1 dans sa mémoire OIM1.

Le module de commande MCOI ordonne alors à la partie émettrice OIE2 du second module d'émission/réception d'émettre une interrogation secondaire EIB2 en direction de la cellule secondaire 2. Cette interrogation secondaire EIB2 est de même type que celle effectuée pour l'interrogation primaire de base de la cellule primaire 1. De même, si l'intensité du signal de la porteuse est suffisante et si le module de commande secondaire MC2 reconnaît la porteuse dans un délai donné, alors ledit module de commande secondaire MC2 passe de l'état de veille à l'état de fonctionnement, ce qui met en oeuvre un circuit de temporisation. La cellule secondaire 2 dispose alors d'une seconde durée prédéterminée pour répondre.

Ledit module de commande secondaire MC2 commande alors au module de traitement MT2 d'extraire le second code C2 contenu dans la mémoire secondaire M2-2. Ledit module de traitement MT2 insère alors les 16 bits du second code C2 dans une première séquence de bits, à un premier endroit prédéterminé qui servira ultérieurement. Cette première séquence est transmise à la partie émettrice E2 du module de réception/émission qui la transmet par voie d'ondes sous la forme d'une réponse secondaire ERB2 à l'organe interrogateur OI. Ce dernier réceptionne ERB2 et mémorise la première séquence de bits qu'elle contient dans sa mémoire OIM2, ce qui met fin à l'étape b).

Pour effectuer cette interrogation secondaire, l'organe interrogateur OI contient également une temporisation de durée déterminée. Ainsi, en cas de dépassement de ladite durée, ou de réponse secondaire ERB2 non conforme, ledit organe interrogateur OI déclenche une alarme.

En revanche, si les interrogations primaire et secondaire se sont effectuées dans la durée impartie, la procédure se poursuit normalement par l'étape c).

### - Etape c) :

Le module de commande MCOI commande au module de traitement MTOI d'extraire le second code C2 de 16 bits de la première séquence de bits, qui est contenu dans la mémoire OIM2. Les bits de ce code sont alors permutés puis on extrait par exemple 8 bits C'2 parmi les 16 bits ainsi permutés, selon un protocole prédéterminé.

Ces 8 bits C'2 sont alors insérés en un second endroit prédéterminé par le premier endroit de la première séquence, en compagnie de la première représentation FR1 du premier code C1 stocké dans la mémoire OIM1, dans une seconde séquence de bits contenant par ailleurs une zone d'ordre correspondant à une transaction donnée. Les 8 bits C'2 et la première représentation du premier code forment alors une seconde représentation SR2 des premier et second codes.

La seconde séquence est alors transmise à la partie émettrice OIE2 du second module d'émission/réception qui la transmet par voie d'ondes sous la forme d'une interrogation complémentaire EIC. Cela termine l'étape c).

### - Etape d) :

A réception de EIC, le module de commande secondaire MC de la cellule secondaire 2 transmet la seconde séquence de bits au module de traitement MT2 qui, en fonction d'un traitement prédéterminé des 8 bits C' et de leur emplacement dans la seconde séquence génère un troisième C''2, qu'il compare au seconde C2 mémorisé dans la mémoire secondaire M2-2. Puis, ledit module de traitement MT2 compare la seconde représentation C'1 du premier code à la représentation de ce premier code qui est mémorisé dans la mémoire secondaire M2-1. Cela termine l'étape d).

### - Etape e) :

Si les deux comparaisons sont réussies, le module de traitement MT2 peut effectuer la transaction qui est contenue dans la zone d'ordre de la seconde séquence.

Pour cela, ledit module génère une troisième séquence de bits qu'il transmet à la partie émettrice E2 du module de réception/émission qui la transmet par voie d'ondes sous la forme d'une réponse complémentaire ERC à l'organe interrogateur OI. Après cette émission, si la seconde durée prédéterminée est écoulée, le module de commande secondaire MC2 commute de l'état de fonctionnement à l'état de veille.

A réception de la réponse complémentaire ERC, le module de commande de l'organe interrogateur OI peut soit afficher la réponse à la transaction sur un écran, soit communiquer ladite réponse à un central. Cela met fin à la procédure.

En revanche, si la seconde réponse reçue n'est pas conforme, ou si elle contient un code spécifique CS1 indiquant qu'une interrogation primaire ou secondaire n'a pas abouti, alors l'étape e) est modifiée comme indiqué ci-après.

Le module de traitement MT2 de la cellule secondaire 2 incrémente un compteur d'incrémentation CI qu'il contient et qui est mis à zéro après chaque transaction réussie.

Si la valeur du compteur CI est inférieure à un nombre N choisi, par exemple 3, alors ledit module de traitement MT2 transmet à la partie émettrice E2 du module de réception/émission un code d'ordre qu'elle transmet alors par voie d'ondes sous la forme d'une réponse complémentaire d'ordre ECO à l'organe interrogateur OI. Ce code d'ordre ordonne au module de commande OIMC de recommencer complètement la procédure à l'étape b).

La nouvelle procédure pourra être effectuée à d'autres fréquences que la procédure qui vient de se dérouler. Cette protection supplémentaire permet de renforcer encore la protection contre les tentatives de brouillage électronique.

Dès que la valeur du compteur d'incrémentation est supérieure ou égale à N, le module de traitement MT2 de la cellule secondaire 2 transmet à la partie émettrice E2 du module de réception/émission un code d'alarme qu'elle transmet par voie d'ondes sous forme d'une réponse complémentaire d'alarme ERCA à l'organe interrogateur OI qui se met automatiquement en état d'alarme. Une telle alarme peut s'afficher soit sur l'écran de l'organe interrogateur OI, soit être transmise à un central.

Dans le même temps, le module de commande MC2 de la cellule secondaire 2 commute de l'état de fonctionnement à l'état de veille afin d'éviter de consommer inutilement la pile qu'il contient en cas de dysfonctionnement de l'un des éléments constituant le dispositif.

Bien entendu, en cas d'émission d'un code d'alarme ERCA, on peut envisager que le module de commande MC2 ne commute pas immédiatement après l'émission, mais continue d'émettre son code d'alarme pendant une durée prédéterminée.

De même, à réception d'un code d'alarme, on peut envisager, pour des raisons de sécurité, une nouvelle interrogation de l'une au moins des cellules afin d'éviter de déclencher l'alarme en cas de dysfonctionnement momentané de l'un des constituants du dispositif, ou d'une mauvaise réception d'une interrogation par l'une des cellules 1 ou 2, ou d'une réponse par l'organe interrogateur OI.

Dans ce cas, l'alarme ne serait déclenchée qu'après confirmation par la cellule secondaire de son code d'alarme.

L'organe interrogateur OI pourra être soit fixe, soit portable. Ainsi, on peut envisager de fournir aux forces de l'ordre des organes interrogateurs portables, ce qui leur permettrait d'interroger à tout moment un véhicule suspect sur ordre ou sur simple présomption. Un organe interrogateur fixe pourrait être implanté en de très nombreux endroits de passages de véhicules comme par exemple les autoroutes, les parkings, les douanes.

Un tel organe interrogateur fixe est aisément réalisable puisqu'il peut être divisé en plusieurs éléments comme cela est illustré sur la figure 4, où ledit organe interrogateur comprend un boîtier B logeant les modules de traitement et de commande, et les mémoires, et est connecté à deux modules d'émission/réception OIE1-OIR1 et OIE2-OIR2 implantés sous une voie de passage de véhicules automobiles.

Ce type de dispositif fixe nécessite des puissances d'émission relativement faibles, contrairement à un organe interrogateur portable, puisque la possibilité d'espacer les modules d'émission/réception permet de restreindre notablement la portée de leur champ d'action.

Dans une configuration ou les organes interrogateurs sont tous fixes, il est bien évident qu'en cas de procédure non réussie lors d'une première interrogation par un organe interrogateur, la seconde interrogation de vérification sera effectuée par l'organe interrogateur suivant, lequel sera averti par le code d'alarme émis par la cellule secondaire de façon continue ou répétitive.

Les mémoires M1 et M2 du dispositif selon l'invention étant réinscriptibles, les codes qu'elles contiennent peuvent donc être modifiés à tout moment, et selon un protocole donné, par un organe interrogateur OI. Cela permet de lutter efficacement contre les tentatives de vol de fichiers de codes.

Par ailleurs, la grande rapidité des interrogations/réponses permet au dispositif d'interroger des objets se déplaçant à des vitesses pouvant atteindre 250 km/h environ.

Mais, si un tel dispositif convient particulièrement bien au contrôle d'objets en déplacement, il peut parfaitement être utilisé sur des objets fixes.

La présente invention ne saurait se limiter aux fréquences décrites ci-dessus. Toutes autres fréquences autorisées peuvent être envisagées à condition qu'elles autorisent des débits de données suffisants entre les cellules implantées et l'organe interrogateur.

De même, la durée des temporisations pouvant être modifiée à distance, on peut envisager d'effectuer l'interrogation d'un objet de type véhicule automobile en plusieurs étapes, l'une d'entre elle étant réalisée par un premier organe interrogateur en un premier endroit lorsque l'objet est en mouvement, l'autre étant réalisée par un second organe interrogateur en un second endroit différent du premier, lorsque l'objet est immobile.

Par ailleurs, dans certaines applications, comme par exemple les péages de parkings ou d'autoroutes, on peut prévoir d'équiper l'organe interrogateur d'un détecteur de masse métallique propre à lui signaler qu'il doit déclencher automatiquement la procédure d'interrogation.

Enfin, des organes de type capteurs infrarouge et/ou sismique peuvent être prévus dans la cellule primaire, afin de fournir des informations sur l'état de fonctionnement de l'objet dans ou sur lequel les cellules sont logées.

## Revendications

1. Dispositif de télé-contrôle d'un objet (V), du type comprenant un organe interrogateur (OI) apte à effectuer une interrogation primaire par voie d'ondes (EIB1, EIA1) pour interroger sélectivement au moins une cellule primaire réceptrice/émettrice (1) logée dans ou sur ledit objet (V) et contenant dans des moyens de mémorisation primaires (M1) un premier code (C1), et à recevoir par voie d'ondes de ladite cellule primaire (1) une réponse primaire (ERB1, ERA1) susceptible de représenter une partie au moins de ce premier code,
caractérisé en ce qu'il comprend en outre au moins une cellule secondaire réceptrice/émettrice (2) logée dans ou sur ledit objet (V) et contenant dans des moyens de mémorisation secondaires (M2) un second code (C2) et une première représentation (FR1) d'une partie au moins du premier code (C1), et apte à émettre, en réponse à une interrogation secondaire (EIB2), une réponse secondaire (ERB2) susceptible de représenter une partie au moins de ce second code (C2), ainsi qu'à émettre, après une interrogation primaire de la cellule primaire (EIB1, EIA1) et une interrogation secondaire de la cellule secondaire (EIB2), au moins une réponse complémentaire (ERC) en réponse à une interrogation complémentaire (EIC) effectuée par l'organe interrogateur (OI), ladite interrogation complémentaire (EIC) contenant une seconde représentation (SR2) d'une partie au moins des premier et second codes émis respectivement par lesdites cellules primaire (1) et secondaire (2) en réponse aux interrogations primaire et secondaire (EIB1, EIA1 et EIB2),
ce qui permet à la cellule secondaire (2)) d'effectuer une réponse complémentaire (ERC) en fonction des réponses primaire et secondaire des cellules primaire (1) et secondaire (2), respectivement.

2. Dispositif selon la revendication 1, caractérisé en ce que les liaisons d'émission-réception entre l'organe interrogateur (OI) et les cellules primaire (1) et secondaire (2) s'effectuent sur des fréquences au moins en partie distinctes.

3. Dispositif selon la revendication 2, caractérisé en ce que les liaisons d'émission-réception s'effectuent sur au moins quatre fréquences distinctes, ce qui permet à l'organe interrogateur (OI) de mémoriser de façon sélective la partie au moins des premier et second codes émis par les cellules primaire (1) et secondaire (2) en réponse aux interrogations primaire et secondaire (EIB1, EIA1 et EIB2), en fonction de la fréquence d'émission des réponses de chaque cellule.

4. Dispositif selon la revendication 1, caractérisé en ce que l'interrogation complémentaire (EIC) comprend en outre une zone d'ordre comportant un ordre d'exécuter une "transaction",
et en ce qu'en cas d'absence de réponse de l'une au moins des cellules primaire (1) et secondaire (2), la seconde représentation (SR2) de la partie au moins du code absent est remplacée par un code spécifique (CS1) de déclaration d'absence de ladite cellule absente.

5. Dispositif selon la revendication 4, caractérisé en ce que la cellule secondaire (2) comprend en outre des moyens de traitement (MT2) aptes à comparer les codes des cellules primaire et secondaire contenus dans ses moyens de mémorisation secondaires (M2-1 et M2-2), à la seconde représentation (SR2) des parties au moins des codes respectifs des cellules primaire et secondaire compris dans l'interrogation complémentaire (EIC).

6. Dispositif selon la revendication 5, caractérisé en ce qu'en cas de comparaison réussie avec les codes contenus dans lesdits moyens de mémorisation secondaires (M2), la cellule secondaire (2) est apte à exécuter la transaction.

7. Dispositif selon la revendication 5, caractérisé en ce qu'en cas de comparaison au moins partiellement non réussie, la cellule secondaire (2) est apte à émettre une réponse complémentaire d'ordre (ERCO) propre à commander à l'organe interrogateur (OI) de recommencer au moins une fois les interrogations primaire et secondaire (EIB1, EIA1 et EIB2) des cellules primaire (1) et secondaire (2),
et en ce que la cellule secondaire (2) comprend en outre un compteur d'incrémentation (CI) propre à être incrémenté lors de chaque comparaison partielle ou non réalisée.

8. Dispositif selon la revendication 7, caractérisé en ce que le nombre d'incrémentations autorisées du compteur (CI) est prédéterminé,
et en ce que la cellule secondaire (2) est également apte en cas de dépassement dudit nombre prédéterminé à émettre une réponse complémentaire d'alarme (ERCA).

9. Dispositif selon l'une des revendications précédentes, caractérisé en ce que les moyens de mémorisation primaires (M1) et secondaires (M2) sont réinscriptibles.

10. Dispositif selon la revendication 9, caractérisé en ce que l'organe interrogateur (OI) est également apte à modifier sur ordre le premier code (C1) contenu dans les moyens de mémorisation primaires (M1) et sa première représentation (FR1) dans les moyens de mémorisation secondaires (M2-1), et/ou le second code (C2) contenu dans les moyens de mémorisation secondaires (M2-2).

11. Procédé de télé-contrôle d'un objet, dans lequel:
a) on munit l'objet (V) d'au moins une cellule primaire réceptrice/émettrice (1) logée dans ou sur ledit objet (V) et contenant dans des moyens de mémorisation primaires (M1) un premier code (C1), et apte à émettre une réponse primaire (ERB1, ERA1) en réponse à une interrogation primaire (EIB1, EIA1),
b) on procède à une interrogation sélective primaire par voie d'ondes de cette cellule primaire (1), et on reçoit de ladite cellule primaire (1) une réponse primaire (ERB1, ERA1) susceptible de représenter une partie au moins du premier code (Cl),
caractérisé en ce que :
- à l'étape a), on prévoit au moins une cellule secondaire réceptrice/émettrice (2) logée dans ou sur ledit objet (V) et contenant dans des moyens de mémorisation secondaires (M2-1 et M2-2) un second code (C2) et une première représentation (FR1) d'une partie au moins du premier code (C1), ladite cellule secondaire (2) étant apte à émettre une réponse secondaire (ERB2) en réponse à une interrogation secondaire (EIB2) effectuée par un organe interrogateur (OI), et au moins une réponse complémentaire (ERC) en réponse à une interrogation complémentaire (EIC) effectuée par ledit organe interrogateur (OI),
- à l'étape b) on procède à une interrogation sélective secondaire par voie d'ondes de la cellule secondaire (2), et on reçoit de ladite cellule secondaire (2) une réponse secondaire (ERB2) susceptible de représenter une partie au moins du second code (C2),
et en ce qu'il comprend en outre :
- une étape c) dans laquelle on émet vers la cellule secondaire (2) une interrogation complémentaire (EIC) contenant une seconde représentation (SR2) d'une partie au moins des premier et second codes émis par lesdites cellules primaire et secondaire à l'étape b),
- une étape d) dans laquelle la cellule secondaire (2) compare le second code (C2) et la première représentation (FR1) du premier code contenus dans ses moyens de mémorisation secondaires (M2-2 et M2-1), à la seconde représentation (SR2) des parties au moins des codes respectifs des cellules primaire et secondaire compris dans l'interrogation complémentaire (EIC) émise à l'étape c), et
- une étape e) dans laquelle la cellule secondaire (2) émet au moins une réponse complémentaire (ERC) en fonction de l'interrogation complémentaire (EIC) reçue à l'étape c).

12. Procédé selon la revendication 11, caractérisé en ce qu'on prévoit dans l'interrogation complémentaire (EIC) une zone d'ordre comportant un ordre d'exécuter une "transaction",
et en ce qu'en cas d'absence de réponse de l'une au moins des cellules primaire (1) et secondaire (2), on remplace la seconde représentation (SR2) de la partie au moins du code absent par un code spécifique (CS1) de déclaration d'absence de ladite cellule absente.

13. Procédé selon l'une des revendications 11 et 12, caractérisé en ce qu'en cas de comparaison au moins partiellement non réussie dans l'étape d), il est prévu de recommencer au moins une fois les étapes b) à d), et d'incrémenter un compteur d'incrémentation (CI) logé dans la cellule secondaire (C2).

14. Procédé selon la revendication 13, caractérisé en ce que le nombre de répétitions autorisées des étapes b) à d), en cas de comparaison au moins partiellement non réussie, est prédéterminé,
et en ce qu'en cas de dépassement dudit nombre prédéterminé, on prévoit que la cellule secondaire (2) émette une réponse complémentaire d'alarme (ERCA), ce qui permet d'avertir un organe interrogateur (OI) seulement en cas de confirmation de non-réussite des étapes b) à d).

15. Procédé selon l'une des revendications 11 à 14, caractérisé en ce que à l'étape b), l'interrogation primaire comprend une interrogation primaire de base (EIB1) et une interrogation primaire de confirmation (EIA1), et la réponse primaire comprend une réponse primaire de base (ERB1) de la cellule primaire (1) pour répondre à une interrogation primaire de base (EIB1) et une réponse primaire de confirmation (ERA1) de la cellule primaire (1) pour répondre à une interrogation primaire de confirmation (EIA1).

16. Procédé selon la revendication 15, caractérisé en ce que la réponse primaire de base (ERB1) est susceptible de représenter une partie au moins du premier code (C1) de la cellule primaire (1),
en ce que l'interrogation primaire de confirmation (EIA1) comprend au moins un code susceptible de représenter la partie au moins du code contenu dans la réponse primaire de base (ERB1),
et en ce que la réponse primaire de confirmation (ERA1) est susceptible de représenter une partie au moins du premier code (C1) de la cellule primaire (1).

## Patentansprüche

1. Vorrichtung zur Fernüberwachung eines Gegenstandes (V), wobei die Vorrichtung eine Abfrageeinrichtung (OI) aufweist, die mittels Wellen (EIB1, EIA1) eine erste Abfrage durchführt, um selektiv wenigstens eine erste in oder auf dem Gegenstand (V) angeordnete Empfangs-/Sendezelle (1) abzufragen, in der erste Speichermittel (M1) vorgesehen sind, in denen ein erster Code (C1) und eine erste Antwort (ERB1, ERA1) gespeichert sind, die mittels Wellen von der ersten Zelle (1) gesendet wird, und die wenigstens einen Teil des ersten Codes darstellt,
**dadurch gekennzeichnet**, daß die Vorrichtung außerdem wenigstens eine zweite Empfangs-/Sendezelle (2) aufweist, die in oder auf dem Gegenstand (V) angeordnet ist, in der zweite Speichermittel (M2) vorgesehen sind, in denen ein zweiter Code (C2) und eine erste Darstellung (FR1) wenigstens eines Teils des ersten Codes (C1) gespeichert sind, und wobei die zweite Zelle (2) als Reaktion auf eine zweite Abfrage (EIB2) eine zweite Antwort (ERB2) sendet, die wenigstens einen Teil des zweiten Codes (C2) darstellt, so daß nach einer ersten Abfrage (EIB1, EIA1) der ersten Zelle (1) und einer zweiten Abfrage (EIB2) der zweiten Zelle (2) als Reaktion auf wenigstens eine Ergänzungsabfrage (EIC) von der Abfrageeinrichtung (OI) wenigstens eine Ergänzungsantwort (ERC) gesendet wird, wobei die Ergänzungsabfrage (EIC) eine zweite Darstellung (SR2) wenigstens eines Teils der ersten und zweiten Codes aufweist, die jeweils durch die erste (1) und zweite Zelle (2) in Erwiderung auf die erste und zweite Abfrage (EIB1, EIA1 und EIB2) gesendet wurden, und die der zweiten Zelle (2) erlaubt, eine Ergänzungsantwort (ERC) zu senden, die jeweils von der ersten und zweiten Antwort (ERA1, ERB1 und ERB2) der ersten (1) und zweiten Zelle (2) abhängt.

2. Vorrichtung nach Anspruch 1, **dadurch gekennzeichnet**, daß die Sende-Empfangs-Verbindungen zwischen der Abfrageeinrichtung (OI) und der ersten, (1) sowie zweiten Zelle (2) durch wenigstens teilweise unterschiedliche Frequenzen realisiert werden.

3. Vorrichtung nach Anspruch 2, **dadurch gekennzeichnet**, daß die Sende-Empfangs-Verbindungen durch mindestens vier unterschiedliche Frequenzen realisiert werden, die es der Abfrageeinrichtung (OI) ermöglichen, wenigstens einen Teil des ersten und zweiten Codes, der von der ersten (1) und zweiten Zelle (2) als Reaktion auf die erste und zweite Abfrage (EIB1, EIA1 und EIB2) gesendet wird, in Abhängigkeit von der Emissionsfrequenz der Antworten jeder Zelle in selektiver Weise zu speichern.

4. Vorrichtung nach Anspruch 1, **dadurch gekennzeichnet**, daß die Ergänzungsabfrage (EIC) außerdem einen Befehlsbereich umfaßt, der einen Befehl zur Ausführung einer "Transaktion" enthält,
und daß im Falle des Fehlens der Antwort wenigstens einer der ersten (1) und zweiten Zellen (2) die zweite Darstellung (SR2) wenigstens eines Teils des fehlenden Codes durch einen spezifischen Code (CS1) ersetzt wird, der die Abwesenheit der fehlenden Zelle erklärt.

5. Vorrichtung nach Anspruch 4, **dadurch gekennzeichnet**, daß die zweite Zelle (2) außerdem Verarbeitungsmittel (MT2) aufweist, die die Codes der ersten und zweiten Zelle, die in zweiten Speichermitteln (M2-1) und (M2-2) enthalten sind, mit der zweiten Darstellung (SR2) wenigstens eines Teils des jeweiligen Codes der ersten und zweiten Zelle vergleichen, die in der Ergänzungsabfrage (EIC) enthalten sind.

6. Vorrichtung nach Anspruch 5, **dadurch gekennzeichnet**, daß im Fall eines erfolgreichen Vergleichs zwischen den Codes, die in den zweiten Speichermitteln (M2) enthalten sind, die zweite Zelle (2) die Transaktion ausführt.

7. Vorrichtung nach Anspruch 5, **dadurch gekennzeichnet**, daß im Fall, daß der Vergleich wenigstens teilweise mißlingt, die zweite Zelle (2) eine eigene Befehls-Ergänzungsantwort (ERCO) sendet, um die Abfrageeinrichtung (OI) zu veranlassen, die erste und zweite Abfrage (EIB1, EIA1 und EIB2) der ersten (1) und zweiten Zelle (2) wenigstens einmal zu wiederholen,
und daß die zweite Zelle (2) außerdem einen eigenen Aufwärtszähler (CI) enthält, der bei jedem wenigstens teilweise mißlungenen Vergleich inkrementiert wird.

8. Vorrichtung nach Anspruch 7, **dadurch gekennzeichnet**, daß die Zahl der zulässigen Inkrementationen des Zählers (CI) vorgegeben ist,
und daß die zweite Zelle (2) ebenfalls im Falle des Überschreitens der vorgegebenen Anzahl eine Alarm-Ergänzungsantwort (ERCA) sendet.

9. Vorrichtung nach einem der vorstehenden Ansprüche, **dadurch gekennzeichnet**, daß die ersten (M1) und zweiten Speichermittel (M2) wiederbeschreibbar sind.

10. Vorrichtung nach Anspruch 9, **dadurch gekennzeichnet**, daß die Abfrageeinrichtung (OI) auf Befehl den ersten Code (C1), der in den ersten Speichermitteln (M1) enthalten ist und seine erste Darstellung (FR1), die in den zweiten Speichermitteln (M2-1) enthalten ist und/oder den zweiten Code (C2), der in den zweiten Speichermitteln (M2-2) enthalten ist, ändert.

11. Verfahren zur Fernüberwachung eines Gegenstandes, bei dem:
a) der Gegenstand (V) mit wenigstens einer ersten, im oder auf dem Gegenstand (V) angeordnete Empfangs-/Sendezelle (1) ausgerüstet ist, die erste Speichermittel (M1) aufweist, in denen ein erster Code (C1) gespeichert ist, wobei die erste Zelle (1) eine erste Antwort (ERB1, ERA1) als Reaktion auf eine erste Abfrage (EIB1, EIA1) sendet, wobei
b) bei einer ersten selektiven Abfrage dieser ersten Zelle (1) mittels Wellen von der ersten Zelle (1) eine erste Antwort (ERB1, ERA1) gesendet wird, die wenigstens einen Teil des ersten Codes (C1) darstellt,
**dadurch gekennzeichnet**, daß
- in der Phase a) wenigstens eine in oder auf dem Gegenstand (V) angeordnete zweite Empfangs-/Sendezelle (2) vorgesehen wird, die zweite Speichermittel (M2-1 und M2-2) aufweist, in denen ein zweiter Code (C2) und eine erste Darstellung (FR1) wenigstens eines Teils des ersten Codes (C1) gespeichert sind, wobei die zweite Zelle (2) auf eine zweite Abfrage (EIB2) von einer Abfrageeinrichtung (OI) eine zweite Antwort (ERB2) und auf eine Ergänzungsabfrage (EIC) durch die Abfrageeinrichtung (OI) wenigstens eine Ergänzungsantwort (ERC) sendet,
- und daß in der Phase b) von der zweiten Zelle (2) auf eine zweite selektive Abfrage mittels Wellen eine zweite Antwort (ERB2) gesendet wird, die wenigstens einen Teil des zweiten Codes (C2) darstellt
und daß das Verfahren außerdem umfaßt:
eine Phase c) in welcher an die zweite Zelle (2) eine Ergänzungsabfrage (EIC) gesendet wird, die eine zweite Darstellung (SR2) wenigstens eines Teils der ersten und zweiten Codes enthält, die von den ersten (1) und zweiten Zellen (2) in der Phase b) gesendet wurden,
- eine Phase d) in der der zweite Code (C2) und die erste Darstellung (FR1) des ersten Codes, die in den zweiten Speichermitteln (M2-2 und M2-1) enthalten sind, von der zweiten Zelle (2) mit der zweiten Darstellung (SR2) wenigstens eines Teils der Codes verglichen wird, der jeweils von der ersten (1) und zweiten Zelle (2) in der Ergänzungsabfrage (EIC) in der Phase c) gesendet wurden und,
- eine Phase e) in der die zweite Zelle (2) wenigstens eine Ergänzungsantwort (ERC) sendet, die von der in der Phase c) empfangenen Ergänzungsabfrage (EIC) abhängt.

12. Verfahren nach Anspruch 11, **dadurch gekennzeichnet**, daß in der Ergänzungsabfrage (EIC) ein Befehlsbereich enthalten ist, der einen Befehl zur Ausführung einer "Transaktion" enthält,
und daß im Falle des Ausfalls der Antwort wenigstens einer der ersten (1) und zweiten Zellen (2) die zweite Darstellung (SR2) wenigstens eines Teils des fehlenden Codes durch einen spezifischen Code (CS1) ersetzt wird, der die Abwesenheit der fehlenden Zelle erklärt.

13. Verfahren nach einer der Ansprüche 11 und 12, **dadurch gekennzeichnet**, daß im Fall des wenigstens teilweise Fehlschlagens des Vergleichs in der Phase d) die Phasen b) bis d) wenigstens einmal wiederholt werden, und daß ein in der zweiten Zelle (C2) vorgesehener Aufwärtszähler (CI) inkrementiert wird.

14. Verfahren nach Anspruch 13, **dadurch gekennzeichnet**, daß die Anzahl der zulässigen Wiederholungen der Phasen b) bis d), für den Fall, daß der Vergleich wenigstens teilweise fehlschlägt, vorgegeben ist,
und daß in dem Fall, daß diese vorgegebene Anzahl überschritten wird, die zweite Zelle (2) eine Alarm-Ergänzungsantwort (ERCA) sendet, die die Abfrageeinrichtung (OI) nur im Fall der Bestätigung des Fehlschlagens der Phasen b) bis d) benachrichtigt.

15. Verfahren nach einem der Ansprüche 11 bis 14, **dadurch gekennzeichnet**, daß in der Phase b) die erste Abfrage eine erste Basisabfrage (EIB1) und eine erste Bestätigungsabfrage (EIA1) enthält, und daß die erste Antwort eine erste Basisantwort (ERB1) der ersten Zelle (1) enthält, um auf eine erste Basisabfrage (EIB1) zu reagieren, und die erste Antwort außerdem eine erste Bestätigungsantwort (ERA1) der ersten Zelle (1) enthält, um auf eine erste Bestätigungsabfrage (EIA1) zu reagieren.

16. Verfahren nach Anspruch 15, **dadurch gekennzeichnet**, daß die erste Basisantwort (ERB1) wenigstens einen Teil des ersten Codes (C1) der ersten Zelle (1) darstellt,
und daß die erste Bestätigungsabfrage (EIA1) wenigstens einen Code enthält, der wenigstens einen Teil des Codes darstellt, der in der ersten Basisantwort (ERB1) enthalten ist,
und daß die erste Bestätigungsantwort (ERA1) wenigstens einen Teil des ersten Codes (C1) der ersten Zelle (1) darstellt.

## Claims

1. Device for the remote monitoring of an object (V), of the type comprising an interrogating device (OI) capable of carrying out a primary interrogation by way of waves (EIB1, EIA1) in order to interrogate selectively at least one primary transceiver cell (1) housed in or on the said object (V) and containing in primary memory means (M1) a first code (C1), and of receiving by way of waves from the said primary cell (1) a primary response (ERB1, ERA1) capable of representing at least part of this first code,
characterised in that it additionally comprises at least one secondary transceiver cell (2) housed in or on the said object (V) and containing in secondary memory means (M2) a second code (C2) and a first representation (FR1) of at least part of the first code (C1), and capable of emitting, in response to a secondary interrogation (EIB2), a secondary response (ERB2) capable of representing at least part of the second code (C2), and also of emitting, after a primary interrogation of the primary cell (EIB1, EIA1) and a secondary interrogation of the secondary cell (EIB2), at least one complementary response (ERC) in response to a complementary interrogation (EIC) carried out by the interrogating device (OI), the said complementary interrogation (EIC) containing a second representation (SR2) of at least part of the first and second codes emitted respectively by the said primary cell (1) and secondary cell (2) in response to the primary and secondary interrogations (EIB1, EIA1 and EIB2),
which allows the secondary cell (2) to make a complementary response (ERC) according to the primary and secondary responses of the primary cell (1) and secondary cell (2), respectively.

2. Device according to Claim 1, characterised in that the transmission/reception links between the inter-rogating device (OI) and the primary (1) and secondary (2) cells are effected on at least partially separate frequencies.

3. Device according to Claim 2, characterised in that the transmission/reception links are effected on at least four separate frequencies, which allows the inter-rogating device (OI) to store selectively the at least part of the first and second codes emitted by the primary cell (1) and secondary cell (2) in response to the primary and secondary interrogations (EIB1, EIA1 and EIB2), according to the transmission frequency of the responses of each cell.

4. Device according to Claim 1, characterised in that the complementary interrogation (EIC) additionally comprises an order area including an order to execute a "transaction", and in that in the case of absence of response from at least one of the primary (1) and secondary (2) cells, the second representation (SR2) of the at least part of the absent code is replaced by a specific code (CS1) for declaring the absence of the said absent cell.

5. Device according to Claim 4, characterised in that the secondary cell (2) additionally comprises processing means (MT2) capable of comparing the codes of the primary and secondary cells contained in its secondary memory means (M2-1 and M2-2), with the second representa-tion (SR2) of the at least parts of the respective codes of the primary and secondary cells comprised in the complemen-tary interrogation (EIC).

6. Device according to Claim 5, characterised in that in the case of successful comparison with the codes contained in the said secondary memory means (M2), the secondary cell (2) is capable of executing the transaction.

7. Device according to Claim 5, characterised in that in the case of at least partially unsuccessful comparison, the secondary cell (2) is capable of emitting a complementary order response (ERCO) suitable for commanding the interrogating device (OI) to recommence at least once the primary and secondary interrogations (EIB1, EIA1 and EIB2) of the primary cell (1) and secondary cell (2), and in that the secondary cell (2) additionally comprises an incrementation counter (CI) suitable for being incremented at each partial or unsuccessful comparison.

8. Device according to Claim 7, characterised in that the number of permitted incrementations of the counter (CI) is predetermined,
and in that the secondary cell (2) is also capable, in the case where the said predetermined number is exceeded, of emitting a complementary alarm response (ERCA).

9. Device according to one of the preceding claims, characterised in that the primary memory means (M1) and secondary memory means (M2) are re-writable.

10. Device according to Claim 9, characterised in that the interrogating device (OI) is also capable of modifying on command the first code (C1) contained in the primary memory means (M1) and its first representation (FR1) in the secondary memory means (M2-1), and/or the second code (C2) contained in the secondary memory means (M2-2).

11. Method for the remote monitoring of an object, wherein:
a) the object (V) is provided with at least one primary transceiver cell (1) housed in or on the said object (V) and containing in primary memory means (M1) a first code (C1), and capable of emitting a primary response (ERB1, ERA1) in response to a primary interrogation (EIB1, EIA1),
b) a primary selective interrogation is carried out, by way of waves, of the primary cell (1), and there is received from the said primary cell (1) a primary response (ERB1, ERA1) capable of representing at least part of the first code (C1),
characterised in that :
- in step a), at least one secondary transceiver cell (2) is provided, housed in or on the said object (V) and containing in secondary memory means (M2-1 and M2-2) a second code (C2) and a first representation (FR1) of at least part of the first code (C1), the said secondary cell (2) being capable of emitting a secondary response (ERB2) in response to a secondary interrogation (EIB2) carried out by an interrogating device (OI), and at least one comple-mentary response (ERC) in response to a complementary interrogation (EIC) carried out by the said interrogating device (OI),
- in step b) a secondary selective interrogation is carried out, by way of waves, of the secondary cell (2), and there is received from the said secondary cell (2) a secondary response (ERB2) capable of representing at least part of the second code (C2),
and in that it additionally comprises :
- a step c) in which there is transmitted to the secondary cell (2) a complementary interrogation (EIC) containing a second representation (SR2) of at least part of the first and second codes emitted by the said primary and secondary cells in step b),
- a step d) in which the secondary cell (2) compares the second code (C2) and the first representation (FR1) of the first code contained in its secondary memory means (M2-2 and M2-1), with the second representation (SR2) of the at least parts of the respective codes of the primary and secondary cells comprised in the complementary interrog-ation (EIC) transmitted in step c), and
- a step e) in which the secondary cell (2) emits at least one complementary response (ERC) according to the complementary interrogation (EIC) received in step c).

12. Method according to Claim 11, characterised in that there is provided in the complementary interrogation (EIC) an order area including an order to execute a "transaction",
and in that in the case of absence of response from at least one of the primary (1) and secondary (2) cells, the second representation (SR2) of the at least part of the absent code is replaced by a specific code (CS1) for declaring the absence of the said absent cell.

13. Method according to one of Claims 11 and 12, characterised in that in the case of at least partially unsuccessful comparison in step d), provision is made to recommence at least once the steps b) to d), and to increment an incrementation counter (CI) housed in the secondary cell (C2).

14. Method according to Claim 13, characterised in that the number of permitted repetitions of steps b) to d), in the case of at least partially unsuccessful comparison, is predetermined,
and in that in the case where the said predetermined number is exceeded, provision is made for the secondary cell (2) to emit a complementary alarm response (ERCA), which makes it possible to warn an interrogating device (OI) only in the case of confirmation of lack of success of steps b) to d).

15. Method according to one of Claims 11 to 14, characterised in that in step b), the primary interrogation comprises a base primary interrogation (EIB1) and a confirmation primary interrogation (EIA1), and the primary response comprises a base primary response (ERB1) of the primary cell (1) in order to respond to a base primary interrogation (EIB1) and a confirmation primary response (ERA1) of the primary cell (1) in order to respond to a confirmation primary interrogation (EIA1).

16. Method according to Claim 15, characterised in that the base primary response (ERB1) is capable of representing at least part of the first code (C1) of the primary cell (1),
in that the confirmation primary interrogation (EIA1) comprises at least one code capable of representing the at least part of the code contained in the base primary response (ERB1),
and in that the confirmation primary response (ERA1) is capable of representing at least part of the first code (C1) of the primary cell (1).
